## Europäisches Patentamt
## European Patent Office
## Office européen des brevets

(19)

(11) Veröffentlichungsnummer: **0 305 961 B1**

(12) **EUROPÄISCHE PATENTSCHRIFT**

(45) Veröffentlichungstag der Patentschrift:
05.06.91 Patentblatt 91/23

(51) Int. Cl.⁵: **G01N 27/416**

(21) Anmeldenummer: **88114096.6**

(22) Anmeldetag: **30.08.88**

(54) **Elektrochemische Messzelle mit einem sauren Elektrolyten.**

(30) Priorität: **02.09.87 DE 3729287**

(43) Veröffentlichungstag der Anmeldung:
**08.03.89 Patentblatt 89/10**

(45) Bekanntmachung des Hinweises auf die
Patenterteilung:
**05.06.91 Patentblatt 91/23**

(84) Benannte Vertragsstaaten:
**DE FR GB NL**

(56) Entgegenhaltungen:
**GB-A- 2 174 207**
**US-A- 4 268 370**

(56) Entgegenhaltungen:
**US-A- 4 495 051**
**PATENT ABSTRACTS OF JAPAN Band 10, Nr 173 (P-469)(2229), 18 Juni 1986 & JP - A - 61 023 960**

(73) Patentinhaber: **Drägerwerk Aktiengesellschaft**
**Moislinger Allee 53-55**
**W-2400 Lübeck 1 (DE)**

(72) Erfinder: **Gambert, Rudolf, Dr. Dipl.-Chem.**
**Mühlenweg 8**
**W-2406 Arfrade (DE)**
Erfinder: **Kühn, Uwe, Dipl.-Chem.**
**Grote Bleeken 12**
**W-2400 Lübeck (DE)**

## Beschreibung

Die Erfindung betrifft eine elektrochemische Meßzelle mit einer Anode und einer Kathode, welche in einem sauren Elektrolyten zur galvanischen Messung reduzierbaren Gase, insbesondere von Sauerstoff, aufgenommen und in einem Gehäuse untergebracht sind, welches den Elektrolytraum gegenüber der zu untersuchenden Gasatmosphäre mit einer permeablen Membran abschließt.

Derartige Meßzellen werden vorzugsweise zum Nachweis von Sauerstoff in Luft eingesetzt, wobei der durch die Membran in den Elektrolyten diffundierende Sauerstoff reduziert wird. An der Kathode wird Sauerstoff zu Wasser reduziert, wobei Protonen verbraucht und Elektronen abgegeben werden. Die dazu notwendigen Protonen müssen von dem Elektrolyten geliefert werden.

Als saure Elektrolyten werden Monocarbonsäuren wie Essigsäure, Propionsäure oder Buttersäure in wässriger Lösung eingesetzt. Der Dissoziationsgrad dieser Monocarbonsäuren ist jedoch so gering, daß eine für eine Sauerstoffmessung notwendige Leitfähigkeit nicht erreicht wird, ohne einen Zusatz von Salzen dieser Säuren beizumischen.

Eine derartige elektrochemische Meßzelle mit einem sauren Elektrolyten ist in der US-A 4 495 051 beschrieben.

Bei der bekannten elektrochemischen Meßzelle werden während der Messung ständig Protonen verbraucht, die dem Elektrolyten entnommen werden müssen. Bei den verwendeten Monocarbonsäuren ist diese Protonenkapazität schnell erschöpft. Wenn der Protonenvorrat verbraucht ist, ist ein weiterer Betrieb der Meßzelle nicht mehr möglich, so daß ihre Lebensdauer sehr stark eingeschränkt ist. Durch den anhaltenden Protonenverbrauch erfolgt in der Elektrolytlösung eine Verschiebung des pH-Wertes in alkalischer Richtung. Überschreitet dieser pH-Wert den Wert 7, kann es zur Bildung von schwerlöslichen Hydrogencarbonaten und schließlich Carbonat kommen, welche die Funktion der Meßzelle nachteilig beeinflussen. Es bildet sich dann eine Passivierungsschicht auf der Anode und eine Carbonatschicht zwischen Kathode und Diffusionsmembran, die zu einer Erhöhung der Überspannung und somit einer Reduktion der Leitfähigkeit führt.

Durch Zugabe von Salzen der verwendeten Säuren, wie z.B. Alkalimetall- und/oder Ammoniumsalzen, wird zwar durch deren hohen Dissoziationsgrad die Leitfähigkeit erhöht, sie tragen aber nicht zu einer höheren Protonenkapazität des Elektrolyten bei. Außerdem ist die beimischbare Menge an Salzen begrenzt, da diese aufgrund ihres basischen Charakters den pH-Wert der Lösung erhöhen, was im Hinblick auf die $CO_2$-Festigkeit des Sensors einen unerwünschten Effekt hat, insbesondere, wenn die pH-Grenze von 7 überschritten wird. In vielen Anwendungsfällen, besonders bei der Sauerstoffmessung in Atemgas, ist mit einem hohen Anteil von $CO_2$ in dem zu untersuchenden Gas zu rechnen. Da die den Elektrolyten zur umgebenden Gasatmosphäre hin abschließende Membran für $CO_2$ durchlässig sein kann, führt der Kontakt des Elektrolyten mit dem in der Umgebungsluft befindlichen $CO_2$ zu einer zusätzlichen Bildung von Carbonaten und Hydrogencarbonaten, die sich im Hinblick auf eine Verschiebung des pH-Wertes zu niedrigeren Werten äußert, die bei Verwendung von Bleianoden zu einer Ablagerung von Bleioxyd und Bleicarbonat an der Anodenoberfläche führt. Da es aufgrund der Schwerlöslichkeit von Bleikarbonaten zur Ausfällung von Salzen kommt, wird die Funktion der Kathode beeinträchtigt, da dem diffundierenden Sauerstoff zusätzliche Diffusionsbarrieren gegenüberstehen. Darüber hinaus wird durch den Aufbau der Kristalle ein mechanischer Druck auf die Diffusionsmembran ausgeübt, der zu einer Belastung der dünnen Diffusionsmembran führt.

Durch den hohen Dampfdruck der bekannten bisher eingesetzten sauren Elektrolyte findet eine nicht zu vernachlässigende Diffusion des Elektrolyten einerseits durch die Membran und andererseits durch Gehäusewände statt, sofern diese aus in heutiger Zeit fast ausschließlich benutzten Kunststoffen bestehen.

Alle diese unerwünschten Eigenschaften verstärken sich noch in höherem Maße insofern, als eine Miniaturisierung der äußeren Abmessungen der Meßzelle angestrebt wird. Damit ist eine ungünstige Verschiebung des Verhältnisses von Elektroden- und innerer Gehäuseoberfläche zu dem Volumen des Elektrolyten vorhanden, wodurch die oberflächenbezogenen Störeffekte, wie z.B. Diffusion aus der Membran, Passivierung der Anodenoberfläche, Erhöhung des Elektrolytwiderstandes, verstärkt werden.

Der vorliegenden Erfindung liegt somit die Aufgabe zugrunde, eine elektrochemische Meßzelle der genannten Art so zu verbessern, daß ohne weitere Zusätze zum Elektrolyten dessen Protonenkapazität erhöht und der Elektrolytwiderstand erniedrigt wird, um eine verbesserte Linearität des Meßsignals und eine erhöhte Lebensdauer der gesamten Meßzelle zu erreichen.

Die Lösung der Aufgabe erfolgt dadurch, daß als Elektrolyt eine wäßrige Lösung einer organischen Säure vorgesehen ist, die für die Abgabe von Protonen während der Messung geeignete multifunktionelle Gruppen enthält.

Diese organischen Säuren haben den Vorteil, daß sie bei gleicher molarer Konzentration wie die bekannten Säuren in der Lage sind, pro Molekül mehrere Protonen abzugeben. Neben dieser höheren Protonenkapazität besitzt dieser Elektrolyt eine bessere Leitfähigkeit, so daß ohne Zugabe leitfähigkeitserhöhernder Salze und der damit verbundenen Erhöhung des pH-Wertes gearbeitet werden kann.

Gegenüber dem bekannten sauren Elektrolyten weisen die mehrfunktionellen Säuren typischerweise eine Lebensdauererhöhung um den Faktor 3 und eine Leitfähigkeitserhöhung um einen Faktor 5 bei im übrigen gleichbleibenden Bedingungen auf.

Mit steigender Anzahl von multifunktionellen Gruppen innerhalb der Säure sinkt ihr Dampfdruck und nimmt ihr Permeationsvermögen ab, so daß ein Verlust an Elektrolytflüssigkeit in Folge von Permeation durch die Membran oder Diffusion durch Gehäusewände aus Kunststoff in gleichem Maße zurückgehen.

Besonders vorteilhaft hat es sich erwiesen, als multifunktionelle Gruppen enthaltende Säure eine aliphatische oder aromatische Bi-/Tri-Carbonsäure oder Di-/Tri-Sulfonsäure zu wählen.

Besonders günstige Eigenschaften dieser Verbindungen liegen in ihrem elektrochemischen Verhalten bezüglich der im Elektrolyten entstehenden niedrigen Grundströme bei Begasung der Meßzelle mit inertem Gas wie z.B. Stickstoff zu Kalibrierzwecken. Das Ansprechverhalten der Meßzelle auf Sauerstoff ist schnell und die Aktivität von Blei- bzw. Kadmiumanoden wird nicht beeinträchtigt, etwa durch die Bildung einer Dickschicht auf der Anodenoberfläche, da die Salze der genannten Säuren im Elektrolyten gut lösbar sind.

Geeignete aliphatische oder aromatische Säuren können z.B. Methansulfonsäure, Benzol-Di-/-Trisulfonsäure oder Phenol-Di-/-Trisulfonsäuren sein. Es können aber auch zweckmäßigerweise Phthalsäuren eingesetzt werden. Eine besonders günstige aliphatische Carbonsäure ist die Zitronensäure. Sie bereitet nämlich bei ihrer Verarbeitung keine Probleme, sie ist geruchsneutral und physiologisch unbedenklich, was insbesondere beim Einsatz der Meßzelle im Atemgaskreislauf eines medizinischen Gerätes von Bedeutung ist. Außerdem zeichnet sie sich durch einen geringen Dampfdruck aus, der im Vergleich zu dem Dampfdruck von Essigsäure bei 30°C von 20,8 mm Hg unbedeutend ist, so daß Permeations- bzw. Diffusionserscheinungen vernachlässigt werden können.

Die besonders hohe Dissoziation der mehrfunktionellen Säuren führt zu einer erwünschten hohen Leitfähigkeit, ergibt jedoch bei höheren Säurekonzentrationen einen so niedrigen pH-Wert, daß eine störende Wasserstoffentwicklung an der Anode auftreten kann. Relativ unedle Metalle wie Blei und Cadmium können nämlich in wäßrigen, und speziell in zunehmend saurem Milieu, unter Wasserzersetzung in Lösung gehen, wobei Wasserstoff entwickelt wird. Dieser Vorgang ist unerwünscht, da hierdurch das Anodenmaterial verbraucht wird. In der Praxis hat sich gezeigt, daß bei Verwendung von Blei- oder Kadmiumanoden keine Beeinträchtigung der Meßzellenfunktion durch Wasserstoffentwicklung bis zu einem pH-Wert von 3 festzustellen ist. Um solche Fälle zu vermeiden, bei denen dieser pH-Wert unterschritten wird, hat es sich als zweckmäßig erwiesen, dem Elektrolyten eine zwitterionische Puffersubstanz beizumischen, mit welcher der pH-Bereich zwischen 3 und 7 eingestellt werden kann. An diese Puffersubstanz sind mehrere Anforderungen zu stellen : Sie soll in dem angegebenen pH-Bereich gute Pufferkapazität zeigen, jedoch frei von elektrochemischer Aktivität sein und insbesondere keine Redoxeigenschaften zeigen. Bei Verwendung von Bleianoden muß eine Verträglichkeit mit Bleiionen gegeben sein. Diesen Forderungen entsprechen in besonders geeigneter Weise zwitterionische Puffersubstanzen vom Typ der Morpholino-, Amino- und Iminodiessigsäure oder -sulfonsäure.

Zur Abschätzung einer Lebensdauer von Meßzellen mit einem Elektrolyten mit multifunktionellen Protonen abgebenden Gruppen bei vorgegebenem Elektrolytvolumen, Konzentration und Sauerstoffverbrauch zeigt, daß bei einem mittleren Stromfluß von etwa 10 mA, einem Elektrolytvolumen von 1 mL und einer Elektrolytkonzentration von 3 N im Falle von Essigsäure oder anderen Monocarbonsäuren bis zum Erreichen eines pH-Wertes von 6,8 ca. ein Jahr vergeht, wohingegen mit einem Zitronensäureelektrolyten eine Lebensdauer von etwa drei Jahren erreicht werden kann. Diese Lebensdauer kann durch Zugabe von zwitterionischen Puffersubstanzen, die eine weitere Protonenquelle darstellen, nochmals um den Faktor 1,5 bis 2 erhöht werden. Eine miniaturisierte Meßzelle mit einem mehrfunktionellen sauren Elektrolyten kann bis auf 1/5 der Größe einer Meßzelle mit einem wäßrigen alkalischen Elektrolyten reduziert werden.

Ein Ausführungsbeispiel der Erfindung wird anhand der schematischen Zeichnung dargestellt und im folgenden näher erläutert.

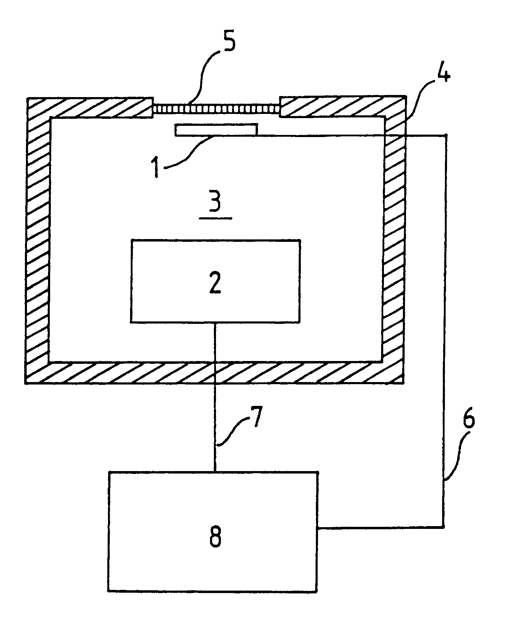

Die einzige Figur zeigt eine elektrochemische Meßzelle mit einer Kathode (1) und einer Anode (2), welche in einem Elektrolytraum (3) des Meßzellengehäuses (4) eingebracht sind. Der Elektrolytraum (3) ist mit einer wäßrigen Lösung von Zitronensäure gefüllt. Zur Umgebung hin ist der Elektrolytraum (3) durch eine für Sauerstoff permeable Membran (5) abgeschlossen. Die Kathode (1) und die Anode (2) besitzen Meßanschlüsse (6, 7), die durch das Gehäuse (4) hindurchgeführt und an einer Auswerteeinheit (8) zur weiteren Verarbeitung der Meßsignale angeschlossen sind.

## Ansprüche

1. Elektrochemische Meßzelle mit einer Anode und einer Kathode, welche in einem sauren Elektrolyten zur galvanischen Messung von reduzierbaren Gasen wie z.B. Sauerstoff, aufgenommen und in einem Gehäuse untergebracht sind, welches den Elektrolytraum gegenüber der zu untersuchenden Gasatmosphäre mit einer permeablen Membran abschließt, dadurch gekennzeichnet, daß als Elektrolyt eine wäßrige Lösung einer für die Abgabe von Protonen während der Messung geeignete multifunktionelle Gruppen enthaltenden organischen Säure vorgesehen ist.

2. Elektrochemische Meßzelle nach Anspruch 1, dadurch gekennzeichnet, daß die multifunktionelle Gruppen enthaltende Säure eine aliphatische oder aromatische Di-/Tri-Carbonsäure oder Di-/Tri-Sulfonsäure ist.

3. Elektrochemische Meßzelle nach einem der Ansprüche 1 oder 2, dadurch gekennzeichnet, daß die Säure Zitronensäure ist.

4. Elektrochemische Meßzelle nach einem der Ansprüche 1 bis 3, dadurch gekennzeichnet, daß dem Elektrolyten eine zwitterionische Puffersubstanz beigemischt ist.

5. Elektrochemische Meßzelle nach Anspruch 4, dadurch gekennzeichnet, daß die Puffersubstanz eine Iminodiessigsäure oder -sulfonsäure ist.

analyser, caractérisée en ce que l'électrolyte est constitué par une solution aqueuse d'un acide organique apte à fournir des protons pendant la mesure et contenant des groupes multifonctionnels.

2. Cellule de mesure électrochimique selon la revendication 1, caractérisée en ce que l'acide contenant des groupes multifonctionnels est un acide bi-/tri-carboxylique ou bi-/tri-sulfonique aliphatique ou aromatique.

3. Cellule de mesure électrochimique selon l'une des revendications 1 ou 2, caractérisée en ce que l'acide est de l'acide citrique.

4. Cellule de mesure électrochimique selon l'une des revendications 1 à 3, caractérisée en ce que l'électrolyte est additionné d'une substance tampon à ions hermaphrodites.

5. Cellule de mesure électrochimique selon la revendication 4, caractérisée en ce que la substance tampon est un acide imino-biacétique ou sulfonique.

## Claims

1. An electrochemical measuring cell with an anode and a cathode which are contained in an acidic electrolyte for galvanic measurement of reducible gases, such as oxygen and accommodated in a housing, which seals with a permeable membrane the electrolyte chamber relative to the gaseous atmosphere to be examined, characterised in that an aqueous solution of an organic acid containing multifunctional groups suitable for the release of protons during measurement is provided as electrolyte.

2. An electrochemical measuring cell according to claim 1, characterised in that the acid containing multifunctional groups is an aliphatic or aromatic di-/tri-carboxylic acid or di-/tri-sulphonic acid.

3. An electrochemical measuring cell according to one of claims 1 or 2, characterised in that the acid is citric acid.

4. An electrochemical measuring cell according to one of claims 1 to 3, characterised in that a zwitterion buffer substance is admixed to the electrolyte.

5. An electrochemical measuring cell according to claim 4, characterised in that the buffer substance is an iminodiacetic acid or sulphonic acid.

## Revendications

1. Cellule de mesure électrochimique équipée d'une anode et d'une cathode qui, prises dans un électrolyte acide, permettent la mesure électrolytique de gaz réductibles comme l'oxygène par exemple et sont logées dans un carter dont la membrane perméable isole l'électrolyte de l'atmosphère gazeuse à